# EUROPEAN PATENT SPECIFICATION

(11) **EP 0 556 815 B1**
(45) Date of publication and mention of the grant of the patent: **09.09.1998**
(21) Application number: 93102535.7
(22) Date of filing: 18.02.1993
(51) Int. Cl.: C08L 23/16, C08L 23/10

(54) **Heat-sealable polyolefin compositions**
Hitzesiegelfähige Polyolefinzusammensetzungen
Compositions de polyoléfines soudables à chaud

(30) Priority: 18.02.1992 IT MI920347
(43) Date of publication of application: 25.08.1993
(73) Proprietor: MONTELL NORTH AMERICA INC., New Castle County Delaware (US)
(72) Inventor: Burgin, Emanuele, I-40069 Zola Predosa, Bologna (IT); Covezzi, Massimo, I-44100 Ferrara (IT)
(74) Representative: Zumstein, Fritz, Dr.

(56) References cited:
- EP-A- 0 052 557
- EP-A- 0 170 255
- EP-A- 0 483 523
- US-A- 4 643 945

## Description

The present invention relates to a polyolefin composition suitable for the preparation of heat-sealable films and to a process for the preparation of said composition. The use of crystalline copolymers of propylene with olefins (mainly ethylene and/or 1-butene), or certain blends of same with other olefin polymers, particularly copolymers of 1-butene, as materials having sealability properties is known in the art. Said crystalline copolymers of propylene are obtained by polymerizing propylene with small quantities of olefin comonomers in the presence of a coordination catalyst. The comonomers are statistically distributed in the resulting polymer, and the melting point of said polymer is lower than the melting point of crystalline homopolymers of propylene.

However, the introduction of comonomers in the polymer brings about a partial degradation of the crystalline structure, which involves the formation of relatively high quantities of a polymer fraction soluble in organic solvents, such as xylene or n-hexane. The presence of excessively high quantities of the above mentioned soluble fraction constitutes a considerable disadvantage, since it makes said compositions inadequate for some important applications, above all for use in food industry. In particular, according to FDA specifications, the polymers used for products connected with food must have a content of fraction soluble in n-hexane at 50°C lower than or equal to 5.5% by weight, and when used for cooking, lower than or equal to 2.6% by weight.

There is, therefore, a definite need for heat-sealable polyolefin compositions that can be used particularly in the preparation of heat-sealable films, which have a low seal temperature, and a low soluble fraction content.

For this purpose published, European patent application EP-A-0483523 describes compositions of crystalline polymers of propylene comprising (percent by weight):
A) 30-65% of a copolymer of propylene with a C₄-C₈ α-olefin containing from 98 to 80% of propylene;
B) 35-70% of a copolymer of propylene with ethylene, and optionally a C₄-C₈ α-olefin in quantities from 2 to 10%, where the ethylene contained in the copolymer is from 2 to 10% when the C₄-C₈ α-olefin is not present, or said ethylene content is from 0.5 to 5% when the C₄-C₈ α-olefin is present.

Said compositions have seal initiation temperature (as defined below) ranging from 100 to 110°C, and a fraction soluble in n-hexane at 50°C less than 5.5% by weight, typically around 3-5% by weight.

US-A-4,643,945 discloses a polymer blend useful for forming heat sealable plastic films, which blend comprises 40-60% by weight of LLDPE and 40-60% by weight of a terpolymer of propylene, ethylene and butene, wherein the ethylene content is 0.1-10 mole % and the butene content is 0.1-10 mole %. In particular US-A-4,643,945 discloses films made from blends comprising LLDPE and a terpolymer of propylene, ethylene (6.0 mole %) and butene (1.0 mole %), said films having a heat seal initiation temperature of 115°C.

It has now surprisingly been found that by blending proper quantities of linear low density polyethylene (LLDPE) having relatively low melt index E values (MIE according to ASTM-D-1238) with certain types of crystalline copolymer of propylene one obtains heat-sealable polyolefin compositions having a considerably reduced content of solubles in n-hexane at 50°C.

This result is particularly surprising if one considers that the content of solubles thus obtained is not only lower than the content of solubles in the crystalline copolymer(s), of propylene used for the compositions, but it is considerably lower than the content of solubles which can be calculated based on relative proportions of the crystalline copolymer(s), of propylene and LLDPE polyethylene. Also the seal initiation temperature values are low, and often considerably and unpredictably lower than those of the crystalline copolymer(s), of propylene used for the compositions.
Therefore, the present invention provides a polyolefin composition comprising (percent by weight):
A) from 30 to 60%, preferably from 40 to 60%, of LLDPE having MIE from 0.1 to 15, preferably from 0.5 to 5;
B) from 40 to 70%, preferably from 40 to 60%, of a crystalline propylene polymer selected from: a copolymer of propylene with one or more than one C₄-C₈ α-olefin a blend of a copolymer of propylene with one or more than one C₄-C₈ α-olefins and of a copolymer of propylene with ethylene, wherein the total content of comonomer, or comonomers, in (B) is from 8 to 20%, preferably from 8 to 15%, said composition having a seal initiation temperature lower than 110°C.

The content of fraction soluble in n-hexane at 50°C of the composition of the present invention is less than 7% by weight, preferably less than 5.5% by weight, more preferably less than 3% by weight. Solubility values lower than or equal to 5.5% by weight are obtained when the LLDPE content is higher than or equal to 40%. As previously stated, the content of solubles of the compositions is lower than the one of the copolymer(s) of propylene used as component (B). The seal initiation temperature values of the compositions of the present invention are lower than 110°C, preferably lower than or equal to 100°C, most preferably from 85 to 100°C.

By "seal initiation temperature" (S.I.T.) is meant the minimum seal temperature where the seal of a multilayered film having one layer of polypropylene and one of the compositions of this invention does not break when a 200 g load is applied to the film. The particulars will be given in the Examples.

As we will illustrate in the Examples, by operating outside the limits defined above for the present invention, for example by using LLDPE having an MIE value which is too high, (over the limits indicated for (A) for instance) one cannot obtain a good balance of solubles content and SIT.

The LLDPE polyethylene which can be used as component (A) in the compositions of the present invention, preferably has a density ranging from 0.94 to 0.90 g/cm³, more preferably from 0.94 to 0.91 g/cm³, most preferably from 0.93 to 0.915 g/cm³. Said polyethylene contains preferably from 3 to 20% by weight, more preferably from 5 to 15%, of one or more comonomers selected from the C₃-C₁₂, preferably C₄-C₈, α-olefins. Examples of the above mentioned comonomers are propylene; 1-butene; 1-pentene; 1-hexene; 4-methyl-1-pentene and 1-octene. The preferred one is 1-butene.

LLDPEs having the above characteristics and the MIE values comprised within the hints defined above, are available commercially, and can also be prepared by using the polymerization process which is described below.

Examples of preferred C₄-C₈ α-olefin comonomers for component(B) are 1-butene; 1-pentene; 1-hexene; 4-methyl-1-pentene and 1-octene. The 1-butene is particularly preferred among the C₄-C₈ α-olefins.

If (B) is made up of a blend of a propylene/ethylene copolymer and a copolymer of propylene with at least one C₄-C₈ α-olefin, the ethylene content of the first copolymer can be high, as much as 10%, for example.

Specific examples of preferred components (B) are:
- copolymers of propylene with one or more C₄-C₈ α-olefins in quantities ranging from 8 to 15%;
blends of (percent by weight):
(B1) 30-65%, preferably 35-65%, more preferably 45-65%, of a copolymer of propylene with a C₄-C₈ α-olefin containing from 98 to 80%, preferably from 95 to 85%, of propylene;
(B2) 35-70%, preferably 35-65%, more preferably 35-55%, of a copolymer of propylene with ethylene, where the ethylene content in the copolymer ranges from 5 to 10%, preferably from 7 to 9%, as long as the total content of comonomers in (B1) + (B2) is not lower than 8%.

By using said (B1)+(B2) blends in the compositions of the present invention, one obtains SIT values lower than or equal to 100°C.

Generally speaking, the crystalline copolymers of propylene that can be used as components (3) in the compositions of the present invention can be prepared with polymerization processes based on the use of particular Ziegler-Natta catalysts. Said catalysts contain, as essential element, a solid catalyst component comprising a titanium compound having a titanium-halogen bond, and an electron-donor compound, both supported on an activated magnesium halide, and are characterized in that they are capable of producing polypropylene with an isotactic index higher than 90%, preferably higher than 95%. Catalysts with the above characteristics are well known in patent literature. Particularly useful have been the catalysts described in US-A-4,339,054 and EP-C- 45,977. Other examples of catalysts are described in US-A-4,472,524 and US-A-4,473,660.

Generally speaking, solid catalyst components used in these catalysts comprise as electron-donors compounds, those selected from ethers, ketones, lactones, compounds containing N, P, and/or S atoms, and esters of mono- and dicarboxylic acids.

Particularly suited are phthalic acid esters, such as diisobutyl, dioctyl and diphenylphthalate, and benzyl butyl phthalate; malonic acid esters, such as diisobutyl and diethyl malonate; alkyl and aryl pivalates; alkyl, cycloalkyl and aryl maleates; alkyl and aryl carbonates, such as diisobutyl carbonate, ethyl-phenyl carbonate and diphenyl carbonate; and succinic acid esters, such as mono and diethyl succinate.

Other electron-donors particularly suited are the 1,3-diethers of formula 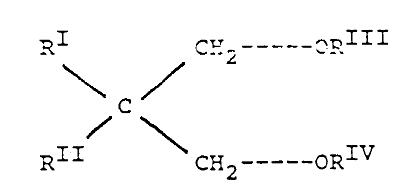 where R^{I}, R^{II}, are the same or different and are C₁₋₁₈ alkyl, C₃₋₁₈ cycloalkyl, or C₆₋₁₈ aryl radicals; R^{III} or R^{IV}, equal are the same or different, and are alkyl radicals with 1-4 carbon atoms.

Ethers of this type are described in published European patent application EP-A-361 493. Examples representative of said compounds are 2-methyl-2-isopropyl-1,3-dimethoxypropane, 2,2-diisobutyl-1,3-dimethoxypropane, and 2-isopropyl-2-cyclopentyl-1,3-dimethoxypropane.

The catalyst components mentioned above are prepared using several methods.

For example, the magnesium halide (used in an anhydrous form containing less than 1% water), the titanium compound, and the electron-donor compound can be milled together under conditions where the magnesium halide is activated; the milled product is then treated one or more times with excess TiCl₄ at a temperature between 80 and 135°C, and washed repeatedly with a hydrocarbon (like hexane for example) until all chlorine ions have disappeared.

According to another method the anhydrous magnesium halide is preactivated by known methods, and then caused to react with excess TiCl₄ containing the electron-donor compound in solution. The temperature during this operation also ranges between 80° and 135°C. Optionally the treatment with TiCl₄ is repeated, and the solid is then washed with hexane or another hydrocarbon solvent to eliminate all traces of unreacted TiCl₄.

Following another method a MgCl₂.nROH adduct (particularly in the form of spheroidal particles) where n is generally a number from 1 to 3, and ROH is ethanol, butanol, or isobutanol, is caused to react with excess TiCl₄ containing the electron-donor compound in solution. The temperature is generally between 80 and 120°C. The solid is then isolated and caused to react once more with TiCl₄, then separated and washed with a hydrocarbon until all chlorine ions have disappeared.

According to another method, magnesium alcoholates and chloroalcoholates (the chloroalcoholates prepared particularly according to the method described in US patent 4,220,554) are caused to react with excess TiCl₄ containing the electron-donor compound in solution, operating under the reaction conditions described above.

In the solid catalyst component, the titanium compound expressed as Ti is generally present in an amount of 0.5 to 10% by weight; the quantity of electron-donor compound which remains fixed on the solid (internal donor) generally ranges from 5 to 20% in moles with respect to the magnesium dihalide.

The titanium compounds which can be used for the preparation of the catalyst components are halides and halogen alcoholates. Titanium tetrachloride is the preferred compound.

Satisfactory results can be obtained also with titanium trihalides, particularly TiCl₃ HR, TiCl₃ ARA, and with halogen alcoholates, such as TiCl₃OR, where R is a phenyl radical.

The reactions indicated above bring to the formation of activated magnesium halide. In the art, other reactions are known, besides the ones just mentioned, which bring to the formation of activated magnesium halide starting from magnesium compounds different from the halides, such as, for example, magnesium carboxylate.

The activated form of the magnesium halides in the solid catalyst components can be identified by the fact that in the X-ray spectrum of the catalyst component, the maximum intensity reflection which appears in the spectrum of the nonactivated magnesium halides (with a surface area of less than 3 m²/g) is no longer present, but in its place there is a halo with the maximum intensity shifted with respect to the position of the maximum intensity reflection of the nonactivated magnesium halide, or by the fact that the maximum intensity reflection presents a width at half-peak at least 30% greater than the maximum intensity reflection which appears in the spectrum of the nonactivated Mg halide. The most active forms are those where the X-ray spectrum shows a halo.

Chloride is the preferred compound among the magnesium halides. In the case of the most active forms of Mg chloride, the X-ray spectrum of the catalyst component shows a halo in place of the reflection which appears at the distance of 2.56·10⁻¹⁰ m (2.56 Å) in the spectrum of the nonactivated chloride.

Al-alkyl compounds which can be used as co-catalysts include the Al-trialkyls, such as Al-triethyl, Al-triisobutyl, Al-tri-n-butyl, and linear or cyclic Al-alkyl compounds containing two or more Al atoms bound between them by O or N atoms, or by SO₄ and SO₃ groups.

Examples of said compounds are:

(C₂H₅)₂ Al-O-Al(C₂H₅)₂

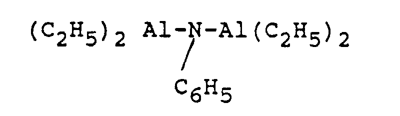

(C₂H₅)₂-Al-SO₂-Al(C₂H₅)₂

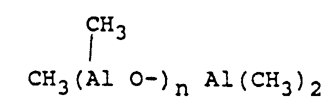

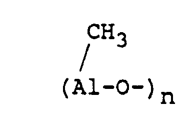

where n is a number from 1 to 20.

The Al-alkyl compound is generally used in such quantities that the Al/Ti ratio is from 1 to 1000.

The electron-donor compounds that can be used as external donors (added to the Al-alkyl compound) include aromatic acid esters, such as alkyl benzoates, and in particular compounds such as alkyl benzoates, and in particular silicon compounds containing at least one Si-OR (R = hydrocarbon radical), 2,2,6,6-tetramethylpiperidine, and 2,6-diisopropylpiperidine.

Examples of silicon compounds are (tert-butyl)₂-Si(OCH₃)_{2,} (cyclohexyl)₂Si(OCH₃)_{2,} (phenyl)₂Si(OCH₃)₂.

1,3-diethers having the formula described above can also be used advantageously. If the internal donor is one of these diethers, the external donors can be omitted.

The polymerization process can be continuous or batch, following known techniques and operating in liquid phase, in the presence or not of inert diluent, or in gas phase, or in mixed liquid-gas techniques. It is preferable to operate in gas phase.

Reaction times and temperatures relative to the two stages are not critical; however, it is best if the temperature ranges from 20° to 100°C. The regulation of the molecular weight is carried out by using known regulators, particularly hydrogen.

The catalysts can be precontacted with small quantities of olefins (prepolymerization). Prepolymerization improves both the performance of the catalysts and the morphology of the polymers.

Prepolymerization is achieved maintaining the catalyst in suspension in a hydrocarbon solvent (for example hexane or heptane), and polymerizing at a temperature from ambient to 60°C for a time sufficient to produce quantities of polymer ranging from 0.5 to 3 times the weight of the solid catalyst component. It can also be done in liquid propylene, at the temperature conditions indicated above, producing quantities of polymer which can reach up to 1000 g per g of catalyst component.

In cases where component (B) is a blend of copolymers, said blend can be obtained directly in polymerization, preparing each copolymer in separate and subsequent stages, and operating in each stage in the presence of the polymer and the catalyst used in the preceding stage. For example, in the case where component (B) is a blend of the (B1) and (B2) copolymers described above, said blend can be obtained by preparing copolymers (B1) and (B2) in two separate stages.

It is also possible to carry out, before or after the synthesis phase of component (B), a stage of copolymerization of the ethylene, thus obtaining component (A) directly in synthesis as well.

In this manner, components (A) and (B) reach an optimum blend. It is possible, therefore, to prepare the compositions of the present invention directly in synthesis by way of a process comprising the polymerization of the monomers in the presence of the stereospecific catalysts described above, where the polymerization is carried out in at least two stages, preparing components (A) and (B) in separate and subsequent stages, and operating in each stage in the presence of the polymer and the catalyst used in the preceding stage. It is preferred to carry out all polymerization stages in gas phase.

The compositions of the present invention can also be prepared by blending components (A) and (B) which are synthesized separately.

If component (B) is a blend of copolymers synthesized separately, the latter can be blended separately or together with component (A),

The blend is carried out by using known techniques starting from pellets, powders, or particles of the polymers obtained directly from the polymerization processes, which are premixed in the solid state (with a Henshel or Lodige mixer, for example), and then put through an extruder. As an alternative, the polymers can be blended by feeding them directly in the extruder. The passage through the extruder is carried out at temperatures that allow all the polymers to be in the molten state, as a way of example at temperatures from 170°C and 250°C.

The following examples illustrate the present invention.

### PREPARATION OF COMPONENT (B)

### 1) General procedure for the preparation of the catalyst

The solid catalyst component used in the examples is prepared as follows.

In inert atmosphere are introduced, in a reactor equipped with agitator, 28.4 g of MgCl₂, 49.5 g of anhydrous ethanol, 100 ml of ROL OB/30 vaseline oil, 100 ml of silicone oil with a viscosity of 350 cs, and the content is then heated to 120°C until the MgCl₂ is dissolved. The hot reaction mixture is then transferred to a 1500 ml vessel equipped with a T-45 N Ultra Turrax agitator, said vessel containing 150 ml of vaseline oil and 150 ml of silicone oil. The temperature is maintained at 120°C, while the agitation continues for 3 minutes at 3000 rpm. The mixture is then discharged into a 2 liter vessel equipped with an agitator and containing 1000 ml of anhydrous n-heptane cooled to 0°C. The particles obtained are recovered by filtration, washed with 500 ml of n-hexane, and the temperature is gradually increased from 30 to 180°C under nitrogen flow for a period of time sufficient to reduce the alcohol content from 3 moles to the particular mole content indicated below.

25 g of adduct, containing the various moles of alcohol indicated below, are transferred to a reactor equipped with an agitator and containing 625 ml of TiCl₄, at 0°C under agitation, bringing the temperature to 100°C over one hour. When the temperature reaches the 40°C, one adds diisobutyl phthalate in such a quantity that the magnesium molar ratio with respect to the phthalate is 8.

The contents of the reactor is heated to 100°C for 2 hours under agitation, and then the solid is allowed to settle. The hot liquid is syphoned off. 550 ml of TiCl₄ are added, and the mixture is heated to 120°C for one hour under agitation. The agitation is interrupted, the solid is allowed to settle, and the liquid is syphoned off hot. The solid is washed 6 times with 200 ml of n-hexane each time at 60°C, and then 3 times at room temperature.

### 2) Polymerization

The polymerization is carried out in continuous process in a series of reactors equipped with devices to transfer the product from one reactor to the one immediately next to it.

In the gas phase, hydrogen and monomers are continuously analyzed and fed in order to maintain the desired concentrations constant.

In the following polymerization runs a mixture of a triethylaluminum (TEAL) activator and a dicyclohexyldimethoxysilane electrondonor, in quantities such that the TEAL/silane weight ratio is about 6.4 is contacted with the solid catalyst component, in such a way that the TEAL/Ti molar ratio is 80, in a reactor at 0°C for about 15 minutes.

The catalyst is then transferred to another reactor containing an excess of liquid propylene, and prepolymerized for a period of 3 to 5 minutes at a temperature ranging from 15 to 25°C.

In the first run, the prepolymer is transferred into another reactor in order to polymerize the monomers in gas phase, so as to form component (B).

In the second run component (B2) is prepared in the first reactor in gas phase, then the product of the above reactor is introduced, after having eliminated any unreacted monomers, to the second reactor in gas phase in order to polymerize the monomers, so as to form component (B1).

For the first run one uses a solid catalyst component obtained from a MgCl₂.2,lC₂H₅OH adduct and for the second run, a solid catalyst component obtained from a MgCl₂.1,5C₂H₅OH adduct.

The starting products and relative operating conditions are set forth in Table lA; the results of the polymerization tests are shown in Table 1B.

As far as Table 1B is concerned, the following analytic methods are used for the analyses reported therein.

### Ethylene (C₂) content

Determined by IR spectroscopy.

### 1-butene (C₄) content

Determined by IR spectroscopy.

### Fraction soluble in hexane

Determined by subjecting a film of the product 100 micron thick to hexane extraction in an autoclave at 50°C for 2 hours. The hexane is then evaporated and the dry residue is determined.

### Melt index

Determined according to ASTM D 1238, condition L.

### Seal initiation temperature (S.I.T.)

Determined after the film is made consistent with the following methods.

### Film preparation

Various films with a thickness of 50 microns are prepared by extruding the compositions at 200°C.

Each film thus obtained is superimposed to a polypropylene film having an isotactic index of 97 (in boiling n-heptane), and Melt Flow Rate (MFR) (according to ASTM D 1238 L) of 4.5 g/10 min. The thickness of the polypropylene film is 560 µm.

The layered films are bonded in a plate press at 140°C with a load of 9000 Kg. maintained for 5 minutes. The bonded films thus obtained are stretched to 6 times their length in both directions, using a TM LONG film stretcher. The resulting film is about 20 micron thick.

From said film one obtains 5x10 cm samples.

### Determining the S.I.T.

The testing is done by applying a 200 g load to heat-sealed samples.

For each test, two of the above samples are superimposed, with the layers constituted by the previously prepared copolymers facing each other. The specimens are then sealed along the 5 cm side using a SENTINEL Model 12-12 AS combination laboratory sealer, for 5 seconds, at a pressure of 1.2 bar (1.2 atmospheres). The width of the seal is 2.5 cm.

The seal temperature is increased by 2°C for each sample to be tested.

The sealed samples are then cut to 2.5x10 cm sections, and the unsealed sides are attached to a dynamometer.

As previously stated, this is done to determine the minimum seal temperature at which the seal does not come apart when a 200 g load is applied. Said temperature represents the seal initiation temperature (S.I.T.).

**Table 1A**

| Run | 1 | 2 |
|---|---|---|
| FIRST REACTOR IN GAS PHASE | | |
| Temperature, °C | 70 | 70 |
| Pressure, bar (atm.) | 16.7 (17) | 15.7 (16) |
| Residence time, min. | 133.5 | 140 |
| H₂/C₃ (mol.) | 0.008 | 0.02 |
| H₂/C₂ (mol.) | --- | 0.662 |
| C₂/C₂ + C₃ (mol.) | --- | 0.03 |
| C₄/C₄ + C₃ (mol.) | 0.21 | 0.085 |

| SECOND REACTOR IN GAS PHASE | | |
|---|---|---|
| Temperature, °C | | 70 |
| Pressure, bar (atm.) | | 13.2 (13.5) |
| Residence time, min. | | 67.6 |
| H₂/C₃ (mol.) | | 0.036 |
| C₄/C₄ + C₃ (mol.) | | 0.23 |

**Table 1B**

| Run | 1 | 2 |
|---|---|---|
| Fraction (B1)* | -- | 33.7 |
| Fraction (B2)* | -- | 66.2 |
| C₄ in (B)* | 15.8 | -- |
| C₄ in (B1)* | -- | 17.2 |
| C₂ in (B2)* | -- | 2.7 |
| C₄ in (B2)* | -- | 6.62 |
| MFR, g/10 min | 9.7 | 6.7 |
| Soluble in Hexane at 50°C* | 6 | 10 |
| SIT °C | 105 | 99 |
| Yield, g polymer/g cat. comp. | 3200 | 12891 |

| | | |
|---|---|---|
| * % by weight | | |

Using the propylene copolymers prepared during the runs indicated above, one prepares the polyolefin compositions by mixing said copolymers with LLDPE.

One conducts a first mechanical cold blending of the particles of the propylene copolymers and LLDPE pellets in the quantities indicated in the following examples, by using a LODIGE mixer. Said mechanical blending lasts 10 minutes. The mechanical blends thus obtained are put through a single-screw extruder at temperatures ranging from 190 to 210°C, with a temperature at the approach to the die and of the die itself at about 200°C and pelletized. The resulting pellets are used to measure the SIT and extractability in n-hexane at 50°C on films obtained by the methods described above.

### Example 1

50 parts by weight of the propylene copolymer prepared in run 1 are mixed with 50 parts by weight of NOVACOR LLDPE, from Union Carbide Corporation, having a density of 0.9188, MIE=1, and containing 7.3% by weight of 1-butene. The properties of the composition thus obtained are reported in Table 2.

### Comparative example 1

50 parts by weight of the same propylene copolymer of Example 1 are mixed with 50 parts by weight of LADENE M 50026 SABIC LLDPE having a density of 0.9252, MIE=55, and containing 6.7% by weight of 1-butene.

The properties of the composition thus obtained are reported in Table 2.

### Example 2 (Reference Example)

50 parts by weight of the propylene copolymer prepared in run 2 are mixed with 50 parts by weight of the LLDPE used in comparative Example 1. The properties of the composition thus obtained are reported in Table 2.

### Example 3 (Reference Example)

The procedure and ingredients of Example 2 are employed, using 60 parts by weight of propylene copolymer, and 40 parts by weight of LLDPE. The properties of the composition thus obtained are reported in Table 2.

**TABLE 2**

| Example n°. | S.I.T. °C | Soluble in n-hexane at 50°C % by weight |
|---|---|---|
| 1 | 102 | 2.1 |
| compar. 1 | 114 | 4.5 |
| 2 (Reference ) | 94 | 3.1 |
| 3 (Reference) | 94 | 4.2 |

### Example 4 (Reference Example)

A polyolefin composition of the present invention is prepared directly in polymerization operating, basically, as in run 2, except that the product of the second reactor in gas phase is transferred, after degassing the unreacted monomers, to a third reactor in gas phase, where the LLDPE which makes up component (A) is prepared. In the third gas phase reactor the temperature is 80°C, the pressure 20 bar, and the molar ratios are as follows:

| | |
|---|---|
| H₂/C₂ | 0.129 |
| C₄/C₄+C₂ | 0.173 |

The polymer is discharged from the third gas phase reactor when the quantity of LLDPE reaches 30% by weight with respect to the total composition. In a polymerization test conducted separately under the same conditions, the LLDPE has an MIE=1.5, density of 0.9170, and 1-butene content equal to 7.9% by weight.

The values relating to S.I.T. and solubles in n-hexane at 50°C for the polyolefin compositions thus obtained are respectively 100°C and 4.6% by weight.

## Claims

1. A polyolefin composition comprising (percent by weight):
A) from 30 to 60% of LLDPE having MIE from 0.1 to 15;
B) from 40 to 70% of a crystalline propylene polymer selected from: a copolymer of propylene with one or more than one C₄-C₈ α-olefins, a blend of a copolymer of propylene with one or more than one C₄-C₈ α-olefins and of a copolymer of propylene with ethylene, wherein the total content of comonomer, or comonomers, in (B) is from 8 to 20% ;
said composition having a seal initiation temperature lower than 110°C.

2. The polyolefin composition of claim 1, wherein (A) is a copolymer of ethylene containing from 3 to 20% by weight of at least one C₃-C₁₂ α-olefin, and having a density from 0.94 to 0.90.

3. The polyolefin composition of claim 2, wherein (A) is a copolymer of ethylene with 1-butene.

4. The polyolefin composition of claim 1, wherein the C₄₋₈ α-olefins are selected from 1-butene; 1-pentene; 1-hexene; 4-methyl-1-pentene; and 1-octene.

5. The polyolefin composition of claim 1, wherein (B) is a copolymer of propylene with at least one C₄-C₈ α-olefin in an amount from 8 to 15% by weight.

6. The polyolefin composition of claim 1, wherein (B) is a blend of (percent by weight):
(B1) 30-65% of a copolymer of propylene with one or more than one C₄-C₈ α-olefins wherein the content of C₄-C₈ α-olefins in the copolymer is from 2 to 20% ;
(B2) 35-70% of a copolymer of propylene with ethylene, wherein the ethylene content in the copolymer is from 5 to 10%,
provided the total content of comonomer, or comonomers, in (B) is not less than 8%.

7. A process for the preparation of the polyolefin compositions of claim 1, comprising the polymerization of the monomers in the presence of a stereospecific catalyst supported on an active magnesium dihalide, where the polymerization is carried out in at least two stages, preparing components (A) and (B) in separate and consecutive stages, and operating in each stage in the presence of the polymer and the catalyst used in the preceding stage.

8. The process of claim 7, where all the polymerization stages are carried out in gas phase.

## Patentansprüche

1. Polyolefinzusammensetzung, umfassend (in Gewichtsprozent)
A) von 30 bis 60 % LLDPE mit einem MIE von 0,1 bis 15;
B) von 40 bis 70 % ein kristallines Propylenpolymeres, ausgewählt unter einem Copolymeren von Propylen mit einem oder mehr als einem C₄-C₈-α-olefin, einem Gemisch eines Copolymeren von Propylen mit einem oder mehr als einem C₄-C₈-α-Olefin und von einem Copolymeren von Propylen mit Ethylen, worin der Gesamtgehalt des Comonomeren oder der Comonomeren in (B) von 8 bis 20 % beträgt;
wobei die Zusammensetzung eine Siegelungsanfangstemperatur von weniger als 110 °C hat.

2. Polyolefinzusammensetzung nach Anspruch 1, worin (A) ein Ethylencopolymeres ist, das 3 bis 20 Gew-% von wenigstens einem C₃-C₁₂-α-Olefin enthält und eine Dichte von 0,94 bis 0,90 hat.

3. Polyolefinzusammensetzung nach Anspruch 2, worin (A) ein Copolymeres von Ethylen mit 1-Buten ist.

4. Polyolefinzusammensetzung nach Anspruch 2, worin die C₁-C₄-α-Olefine ausgewählt sind unter 1-Buten; 1-Penten; 1-Hexen; 4-Methyl-1-penten und 1-Octen.

5. Polyolefinzusammensetzung nach Anspruch 1, worin (B) ein Copolymeres von Propylen mit wenigstens einem C₄-C₈--α-Olefin in einer Menge von 8 bis 15 Gew-% ist.

6. Polyolefinzusammensetzung nach Anspruch 1, worin (B) ein Gemisch ist von (Gewichtsprozent):
(B1) 30 bis 65 % eines Copolymeren von Propylen mit einem oder mehr als einem C₄-C₈-α-Olefin, wobei der Gehalt an C₄-C₈-α-Olefinen in dem Copolymeren von 2 bis 20 % beträgt;
(B2) 35 bis 70 % eines Copolymeren von Propylen mit Ethylen, wobei der Ethylengehalt in dem Copolymeren von 5 bis 10 % beträgt,
mit der Maßgabe, daß der Gesamtgehalt des Comonomeren oder der Comonomeren in (B) nicht weniger als 8 % beträgt.

7. Verfahren zur Herstellung der Polyolefinzusammensetzung von Anspruch 1, umfassend die Polymerisation der Monomeren in Gegenwart eines stereospezifischen Katalysators, geträgert auf einem aktiven Magnesiumdihalogenid, wobei die Polymerisation in wenigstens zwei Stufen durchgeführt wird, wobei die Komponenten (A) und (B) in getrennten und aufeinanderfolgenden Stufen hergestellt werden und wobei in jeder Stufe in Gegenwart des Polymeren und des in der vorangegangenen Stufe eingesetzten Katalysators gearbeitet wird.

8. Verfahren nach Anspruch 7, worin alle Polymerisationsstufen in der Gasphase durchgeführt werden.

## Revendications

1. Une composition de polyoléfine comprenant (en pourcentages pondéraux):
A) de 30 à 60 % de LLDPE présentant un MIE de 0,1 à 15 ;
B) de 40 à 70 % d'un polymère de propylène cristallin choisi parmi : un copolymère de propylène et de une ou plusieurs α-oléfines en C₄-C₈, un mélange d'un copolymère de propylène et de une ou plusieurs α-oléfines en C₄-C₈ et d'un copolymère de propylène avec l'éthylène, où la teneur totale en comonomère ou en comonomères, dans (B) est de 8 à 20 % ;
ladite composition ayant une température initiale de soudage inférieure à 110°C.

2. La composition de polyoléfine selon la revendication 1, dans laquelle (A) est un copolymère d'éthylène contenant de 3 à 20 % en poids d'au moins une α-oléfine en C₃-C₁₂ et ayant une densité de 0,94 à 0,90.

3. La composition de polyoléfine selon la revendication 2, dans laquelle (A) est un copolymère d'éthylène et de 1-butène.

4. La composition de polyoléfine selon la revendication 1, dans laquelle les α-oléfines en C₄-C₈ sont choisies parmi 1-butène, 1-pentène, 1-hexène, 4-méthyl-1-pentène et 1-octène.

5. La composition de polyoléfine selon la revendication 1, dans laquelle (B) est un copolymère de propylène et d'au moins une α-oléfine en C₂-C₈ en une quantité comprise entre 8 et 15 % en poids.

6. La composition de polyoléfine selon la revendication 1, dans laquelle (B) est un mélange (en pourcentages pondéraux):
(B1) de 30 à 65 % d'un copolymère de propylène et d'une ou plusieurs α-oléfines en C₄-C₈ où la teneur en α-oléfines en C₄-C₈ dans le copolymère est de 2 à 20% ;
(B2) de 35 à 70% d'un copolymère de propylène et d'éthylène dans lequel la teneur en éthylène dans le copolymère est de 5 à 10 % ;
avec cette condition que la teneur totale en comonomére ou comonomères dans (B) n'est pas inférieure à 8 %.

7. Un procédé de préparation des compositions de polyoléfine selon la revendication 1, comprenant la polymérisation des monomères en présence d'un catalyseur stéréospécifique supporté sur un dihalogénure de magnésium actif, dans lequel la polymérisation est effectuée en au moins deux étapes, en préparant des composants (A) et (B) dans des étapes séparées et consécutives et en opérant dans chaque étape en présence du copolymère et du catalyseur utilisés dans l'étape précédente.

8. Le procédé selon la revendication 7, dans lequel toutes les étapes de polymérisation sont effectuées en phase gazeuse.
